# EUROPEAN PATENT SPECIFICATION

(11) **EP 4 013 242 B1**
(45) Date of publication and mention of the grant of the patent: **27.05.2026**
(21) Application number: 20761071.8
(22) Date of filing: 10.08.2020
(51) Int. Cl.: A23L 33/185

(54) **PLANT-BASED NUTRITIONAL COMPOSITIONS**
NAHRUNGSZUSAMMENSETZUNGEN AUF PFLANZLICHER BASIS
COMPOSITIONS NUTRITIONNELLES À BASE DE PLANTES

(30) Priority: 14.08.2019 US 201962886760 P
(43) Date of publication of application: 22.06.2022
(73) Proprietor: ABBOTT LABORATORIES, Abbott Park, IL 60064-3500 (US)
(72) Inventor: PATEL, Gaurav, Gahanna, Ohio 43230 (US); DEWILLE, Normanella, Columbus, Ohio 43220 (US); BURG, Allison, Columbus, Ohio 43201 (US); GROVES, Joshua, Columbus, Ohio 43219 (US); PATEL, Nalini, Plain City, Ohio 43064 (US); PATEL, Thakorbhai, Gahanna, Ohio 43230 (US)
(74) Representative: Boult Wade Tennant LLP
(86) International application number: PCT/US2020/045652
(87) International publication number: WO 2021/030286

(56) References cited:
- WO-A1-2019/143859
- US-A- 4 169 090
- US-B1- 10 143 226
- DATABASE GNPD [online] MINTEL; 29 January 2019 (2019-01-29), ANONYMOUS: "Mocha Vegan Protein and Greens", XP055707879, retrieved from https://www.gnpd.com/sinatra/recordpage/6294583/ Database accession no. 6294583
- DATABASE GNPD [online] MINTEL; 6 February 2019 (2019-02-06), ANONYMOUS: "Chocolate Flavoured Vegan Recovery Blend", XP055741193, retrieved from https://www.gnpd.com/sinatra/recordpage/6315677/ Database accession no. 6315677
- DATABASE GNPD [online] MINTEL; 29 January 2019 (2019-01-29), ANONYMOUS: "Mocha Vegan Protein and Greens", XP055707879, retrieved from www.gnpd.com Database accession no. 6294583
- DATABASE GNPD [online] MINTEL; 6 February 2019 (2019-02-06), ANONYMOUS: "Chocolate Flavoured Vegan Recovery Blend", XP055741193, retrieved from www.gnpd.com Database accession no. 6315677

## Description

### TECHNICAL FIELD

The present invention relates to plant-based nutritional compositions, and in certain embodiments, to plant-based nutritional compositions that are high in protein, high in fiber, and low in calories. More specifically, the invention relates to plant-based nutritional compositions in which the protein comprises fava bean protein isolate and pea protein, and, in selected embodiments, the nutritional compositions are dairy-free, soy-free, and/or vegetarian or vegan. The invention is defined by the appended claims.

### BACKGROUND

Producing plant-based liquid nutritional compositions that are high in protein, high in fiber, low in calories, and have good taste and storage stability is problematic. Current plant-based compositions typically contain pea protein, but often have poor taste and/or mouthfeel. Another plant protein that could be utilized in nutritional compositions is fava bean protein. However, fava beans contain antinutritional factors that interfere with the absorption of nutrients, and fava bean proteins can destabilize with heat and can interact with cations, leading to composition destabilization. Accordingly, improved plant-based nutritional compositions are desired. A powdered beverage composition comprising pea protein and fava bean protein isolate as protein sources is disclosed in the GNPD MINTEL Database; 29 January 2019, Record ID: 6294583 "Mocha Vegan Protein and Greens".

### SUMMARY

The current invention is directed to novel nutritional compositions containing pea protein and fava bean protein which overcome various problems of conventional plant-based nutritional compositions, including of poor mouthfeel, poor taste, instability, and/or negative effects from antinutritional factors.

In specific embodiments, the invention is directed to nutritional compositions comprising carbohydrate, fat, and protein, wherein the protein comprises fava bean protein isolate and pea protein. The fava bean protein isolate comprises 75 wt.% - 95 wt% of a total protein in the composition, and the pea protein comprises 5 wt.% - 25 wt% of the total protein in the composition. Additional embodiments are described herein, as well as improvements and advantages of the inventive nutritional compositions.

### DETAILED DESCRIPTION

Specific embodiments of the present disclosure will now be described. Rather, these embodiments and examples are provided to illustrate more specific features of certain aspects of the invention to those skilled in the art.

All references to singular characteristics or limitations of the present disclosure shall include the corresponding plural characteristic or limitation, and vice versa, unless otherwise specified or clearly implied to the contrary by the context in which the reference is made. Unless otherwise specified, "a," "an," "the," and "at least one" are used interchangeably. Furthermore, as used in the description and the appended claims, the singular forms "a," "an," and "the" are inclusive of their plural forms, unless the context clearly indicates otherwise.

To the extent that the term "includes" or "including" is used in the description or the claims, it is intended to be inclusive in a manner similar to the term "comprising" as that term is interpreted when employed as a transitional word in a claim. Furthermore, to the extent that the term "or" is employed (*e.g*., A or B), it is intended to mean "A or B or both." When the "only A or B but not both" is intended, then the term "only A or B but not both" will be employed. Thus, use of the term "or" herein is the inclusive, and not the exclusive use. When the term "and" as well as "or" are used together, as in "A and/or B", this indicates A or B as well as A and B.

The nutritional compositions and corresponding methods described herein can comprise, consist of, or consist essentially of any of the elements and steps as described herein. Any combination of method or process steps as used herein can be performed in any order, unless otherwise specified or clearly implied to the contrary by the context in which the referenced combination is made.

All ranges and parameters, including but not limited to percentages, parts, and ratios disclosed herein are understood to encompass any and all sub-ranges subsumed therein, and every number between the endpoints. For example, a stated range of "1 to 10" should be considered to include any and all sub-ranges beginning with a minimum value of 1 or more and ending with a maximum value of 10 or less (*e.g*., 1 to 6.1, or 2.3 to 9.4), and to each integer (1, 2, 3, 4, 5, 6, 7, 8, 9, and 10) contained within the range.

All percentages are percentages by weight of the powdered nutritional composition unless otherwise indicated.

The term "plant-based nutritional composition" as used herein, unless otherwise specified, refers to a nutritional composition that contains, other than water, greater than about 95% of materials derived from plants. In specific embodiments, the inventive nutritional compositions are plant-based. In additional embodiments, the nutritional compositions contain, other than water, greater than about 97% plant-based materials, or greater than about 99% plant-based materials. In specific embodiments, the nutritional compositions contain, other than water, about 100% plant-based materials. In specific embodiments, the nutritional compositions contain no measureable amount of non-water ingredients that are not from a plant, i.e., 0 wt%. Specific embodiments of the nutritional compositions are suitable for a flexitarian, vegetarian or vegan diet.

The term "dairy protein" as used herein, unless otherwise specified, refers to bovine-derived protein, including whey protein concentrate, whey protein isolate, whey protein hydrolysate, acid casein, sodium caseinate, calcium caseinate, potassium caseinate, casein hydrolysate, milk protein concentrate, milk protein isolate, and/or milk protein hydrolysate.

The term "fava bean protein concentrate" as used herein, unless otherwise specified, refers to a concentrate containing less than 80 wt % fava bean protein, usually from about 50 to less than 80 wt % fava bean protein. On the other hand, "fava bean protein isolate" as used herein, unless otherwise specified, refers to a fava bean protein material that has undergone additional processing (as compared with the aforementioned concentrate) and contains a higher protein content of at least 80 wt %. Such a fava bean isolate contains less carbohydrate and fat, as well as reduced or no anti-nutritional factors as discussed in further detail below.

The term "anti nutritional factor" as used herein, unless otherwise specified, refers to a natural or synthetic compound that interferes with the absorption of nutrients, where nutrients are substances used by an organism to survive, grow, and reproduce.

The term "natural flavor" as used herein, unless otherwise specified, refers to an ingredient that is an essential oil, oleoresin, essence or extractive, distillate, or product of roasting, heating, or enzymolysis, which contains the flavoring constituents derived from a spice, fruit, vegetable, edible yeast, herb, bark, bud, root, leaf or similar plant material, whose significant function in food is flavoring rather than nutritional.

As used here, "complete protein" indicates protein containing the nine essential amino acids required in the human diet, namely histidine, isoleucine, leucine, lysine, methionine, phenylalanine, threonine, tryptophan, and valine.

The term "free of" as used herein to describe a composition, unless otherwise specified, refers to a composition that contains less about 1 wt% of the specified ingredient. Specific embodiments of the nutritional composition which are free of an ingredient contain less than 0.5 wt% of the ingredient, or less than 0.25 wt%, less than 0.1 wt%, less than 0.01 wt%, less than 0.001 wt%, or less than 0.0001 wt% of the ingredient, or no measureable amount of the ingredient, i.e., 0 wt%.

The nutritional compositions of the invention can be in liquid form, or can be in a powder form which is reconstitutable with water or another liquid to form a liquid compositions. Liquids other than water which can be used to reconstitute powder compositions include almond milk, rice milk, bovine milk or soy milk, as desired. Reference herein to a liquid serving or a liquid nutritional composition refers both to nutritional compositions originally formulated in a liquid form and packaged as such, for example, by aseptic or retort packaging, and to nutritional compositions formed by reconstituting a powder with water or other liquid. Such powders are formed by spray-drying liquid compositions, by dry-blending powdered ingredients. The powders may also be formed by a combination of such processes, i.e., dry blending a spray dried formulation of one or more ingredients with additional dry powder ingredients. Such powders may be packaged for producing individual serving sizes or in bulk as known in the art.

The term "serving" as used herein, unless otherwise specified, refers to a liquid volume of from about 150 ml to about 500 ml, including from about 175 ml to about 475 ml, from about 190 ml to about 450 ml, from about 200 ml to about 350 ml, or from about 235 ml to about 326 ml, intended for a single serving. A serving can also be about 177 ml, about 207 ml, about 237 ml, about 266 ml, about 296 ml, about 330 ml, about 355 ml, about 384 ml, about 414 ml, about 44 ml, or about 473 ml. Varying amounts of a powder nutritional composition can be reconstituted with water or other liquid to form a liquid serving of the nutritional composition. In specific embodiments, from 25 to 125 g powder can be mixed with water or other liquid to form a liquid serving of a size as described. In additional embodiments, from 43 to 100 g, or from 40 to 60 g, powder can be mixed with water or other liquid, for example with 290 ml water or other liquid, to form a single 11 oz (about 330 ml) liquid serving.

Embodiments of the nutritional compositions described herein are low in calories. Specific embodiments of the nutritional composition contain from about 418,4 kJ (100 kcal) to about 1.046 kJ (250 kcal) per serving as described herein, such as in a serving of about 330 ml. Additional embodiments of the liquid nutritional composition contain from about 627,6 kJ (150 kcal) to about 941,4 kJ (225 kcal) in a serving of about 330 ml. Further specific embodiments of the liquid nutritional compositions comprise less than about 836,8 kJ (200 kcal) or, more specifically, from about 627,6 kJ (150 kcal) to about 836,8 kJ (200 kcal) per 330 ml serving as described herein.

Fava bean seeds are a rich source of proteins, carbohydrates, fiber, vitamins, and minerals. However, the biological value of untreated fava beans is negatively affected by the presence of anti-nutritional factors such as trypsin inhibitors, condensed tannins, phytic acid, saponins, lectins, and favism-inducing factors (the aglycones: divicine and isouramil, from vicine (2,6-diamino-4,5-dihydroxypyrimidine 5-b-D-glucopyranoside) and convicine (2,4,5-trihydroxy-6-aminopyrimidine 5-b-D-glucopyranoside)), and the ingestion of untreated fava beans is associated with problems with absorbing nutrients, oxidative stress, and precipitation of the hemolytic disease favism in certain glucose-6-phosphate dehydrogenase-deficient humans. Removal of these anti-nutrients is therefore necessary for the effective utilization of fava bean components, including protein concentrates and isolates, in human nutrition. Tyramine and levodopa are also anti-nutritional factors present in clinically significant quantities in raw fava beans. However, owing to the additional protein purification processes which are conducted to provide a protein isolate having at least 80 wt % fava bean protein, these various anti-nutritionals are reduced to clinically insignificant amounts, or eliminated, in the fava bean protein isolate employed in the present compositions. In specific embodiments of the nutritional compositions, the fava bean protein isolate comprises greater than about 82 wt%, greater than about 85 wt %, or at least 90 wt %, fava bean protein. In additional specific embodiments of the liquid nutritional compositions, the fava bean protein isolate is free of vicine, convicine, divicine, isouramil, tyramine and/or levodopa.

Further, specific embodiments of the nutritional composition are free of fava bean protein concentrate (i.e., purified fava bean materials containing less than 80 wt % fava bean protein). Fava bean protein concentrate can lead to problems of protein destabilization during heat treatment. Additionally, fava bean protein concentrate is typically high in anti-nutritional components which can lead to health problems and/or other components that react with minerals and stabilizers, also leading to stability problems in the nutritional compositions. Such stability problems are typically manifested by precipitated proteins in the finished liquid or reconstituted liquid products that cause a grainy and/or chalky mouthfeel, and especially are predominant in liquid products after aseptic or retort processing. These problems are avoided with the fava bean protein isolate employed in the nutritional compositions of the invention, and the inventive liquid compositions may be retort or aseptically processed without incurring a grainy or chalky mouthfeel. Specifically, in the methods of preparing the nutritional compositions, a combination of the purification and separation processes to produce the fava bean protein isolate and the sterilization processes employed in preparing the nutritional compositions reduces the levels of or completely remove vicine, convicine, divicine and isouramil, and other instability-promoting components from the fava bean protein.

Without being limiting as to the production of fava bean protein isolate, in one embodiment, fava bean protein isolate having at least 80 wt % fava bean protein is obtained from fava bean flour by a series of steps including sifting, soaking, centrifugation, acid precipitation, centrifugation, washing, centrifugation, neutralization, sterilization, homogenization, and spray drying. During the extended processes of precipitation and washing to produce a high protein content isolate, most or all of the water-soluble anti-nutritionals can be removed.

The inventive nutritional compositions described herein include protein, carbohydrate, and fat.

In specific embodiments of the nutritional compositions of the invention as a liquid serving, protein comprises from about 1 wt% to about 30 wt% of the liquid nutritional compositions. In more specific embodiments of a liquid serving of the nutritional composition, the protein comprises from about 1 wt% to about 25 wt% of the liquid composition, including about 1 wt% to about 20 wt%, about 1 wt% to about 15 wt%, about 1 wt% to about 10 wt%, about 5 wt% to about 10 wt%, or about 10 wt% to about 20 wt% of the liquid composition. In additional embodiments of the nutritional composition, the protein comprises from about 5 wt% to about 20 wt% of the liquid serving of the nutritional composition.

The nutritional compositions contain both fava bean protein isolate and pea protein.

In the nutritional composition of the invention, fava bean protein isolate comprises from 75 wt% 95 wt% of the total protein of the nutritional composition, and the pea protein comprises from 5 wt% to 25 wt% of the total protein of the nutritional composition.

In additional specific embodiments, the pea protein is pea protein isolate containing at least about 80 wt % pea protein, which, in combination with the fava bean protein isolate, provides liquid compositions according to the invention having good stability and mouth feel. Pea protein concentrate containing less than about 80 wt % pea protein can cause stability problems and/or inferior sensory properties in the compositions. The combination of the pea protein isolate and the fava bean protein isolate is particularly advantageous in order to provide the liquid compositions with improved mouthfeel.

Additional embodiments of the nutritional compositions of the invention further comprise an additional protein such as rice protein, oat protein, canola protein, corn protein, chick pea protein, algae protein, lentil protein, quinoa protein, almond protein, hemp protein, flax seed protein, protein from one or more fruit powders, protein from one or more vegetable powders, or a combination of any two or more of such proteins. In specific embodiments, the nutritional compositions may include from about 1 to about 15 wt% of such proteins. While additional embodiments may include a dairy protein such as whey protein concentrate, whey protein isolate, whey protein hydrolysate, acid casein, sodium caseinate, calcium caseinate, potassium caseinate, casein hydrolysate, milk protein concentrate, milk protein isolate, and/or milk protein hydrolysate, other embodiments of the nutritional compositions are free of such dairy proteins. Additionally, embodiments may include one or more soy proteins, while in other specific embodiments, the nutritional compositions are soy-free. In further embodiments, the nutritional compositions are prepared without any dairy protein or other dairy ingredient, and therefore are vegan compositions. Further embodiments are, alternatively or in addition, soy-free.

Specific embodiments of the liquid nutritional compositions contain from about 10 grams to about 30 grams of protein, and therefore may be considered high protein content compositions. In further embodiments, the liquid nutritional compositions contain from about 15 grams to about 25 grams of protein, or about 20 grams of protein, or more than 20 grams of protein, per 330 ml serving. The amount or range of protein can be entirely from the fava bean protein isolate and pea protein, or can include one or more additional proteins.

Specific embodiments of the nutritional composition may further comprise at least one free amino acid, for example comprising methionine, tryptophan, threonine, and/or lysine. In specific embodiments, the nutritional composition contains, in addition to the fava bean protein isolate and pea protein, free amino acids such that the nutritional composition contains a complete protein as defined herein.

In specific embodiments, the nutritional compositions also contain β-hydroxy-β-methylbutyrate (HMB). HMB is a naturally occurring short chain fatty acid metabolite of leucine that is known for use in a variety of nutritional products and supplements. Any source of HMB is suitable for use herein, including, but not limited to, the free acid, a salt, including an anhydrous salt, an ester, a lactone, or other product forms that otherwise provide a bioavailable form of HMB in the nutritional composition. Non-limiting examples of suitable salts of HMB for use herein include HMB salts, hydrated or anhydrous, of sodium, potassium, magnesium, chromium, calcium, or other non-toxic salt form. In a specific embodiment, the HMB is provided by calcium HMB monohydrate. In specific embodiments, the nutritional compositions may comprise from about 0.01 to about 10 wt % HMB. In a more specific embodiment, the nutritional compositions comprise from about from about 0.1 wt% to about 7.0 wt%, or more specifically, from about 0.1 wt% to about 5.0 wt%, HMB. In further embodiments, the nutritional compositions provide from about 1 to 3 grams, or more specifically, from about 1.5 to 3 grams, HMB per serving of from about 150 ml to about 500 ml.

In specific embodiments of the nutritional composition, the carbohydrate comprises from about 0.1 wt% to about 10 wt% of the liquid serving of nutritional composition. In more specific embodiments of the liquid composition, the protein comprises from about 0.5 wt% to about 8 wt% of the liquid composition, or for about 1 wt% to about 5 wt% of the liquid nutritional composition.

Specific embodiments of the liquid nutritional composition contain up to about 15 grams of carbohydrate, up to about 10 grams of carbohydrate, or up to about 8 grams of carbohydrate, per 330 ml serving. Specific embodiments of the liquid nutritional compositions contain from about 0.1 gram to about 15 grams of carbohydrate, from about 0.5 gram to about 10 grams of carbohydrate, or from about 1 gram to about 8 grams of carbohydrate, per 330 ml serving. The amount or range of carbohydrate can be entirely from nonfiber or fiber sources, or both. Suitable sources of carbohydrate include, but are not limited to sucrose, maltodextrin, for example rice maltodextrin and/or corn maltodextrin, tapioca, fruit powder, vegetable powder, isomaltulose, sucromalt, allulose, or a combination of two or more thereof. In a specific embodiment, the carbohydrate comprises sucrose. In alternate embodiments, where sucrose is desirably avoided, for example, for a diabetic population, the carbohydrate comprises fructose, honey, isomaltulose, syrup such as maple syrup or agave syrup, and/or the like. Specific embodiments of the liquid nutritional composition comprise sucrose, and, more specifically, from about 1 gram to about 8 grams, or about 7 grams, of sucrose per serving.

Embodiments of the nutritional compositions may include fiber, and, in certain embodiments, the nutritional compositions are high in fiber content. For example, specific embodiments of the liquid nutritional composition contain up to about 10 grams of fiber, or from about 0.5 grams to about 10 grams of fiber, or from about 0.5 grams to about 8 grams of fiber, or from about 2 grams to about 8 grams of fiber, or from about 3 grams to about 8 grams of fiber per 330 ml serving. Specific embodiments of the liquid nutritional composition contain about 5 grams of fiber per 330 ml serving. Suitable fiber includes, but is not limited to, oat fiber, chicory root fiber, whole grain brown rice powder, fruit fiber, vegetable fiber, fructo-oligosaccharides (FOS), galacto-oligosaccharides (GOS), digestion-resistant soluble corn fiber, for example, Fibersol-2, which is a digestion-resistant soluble maltodextrin fiber, gum arabic, and the like, and combinations of two or more thereof. In a specific embodiment, the fiber comprises oat fiber, chicory root fiber or a combination of oat fiber and chicory root. In more specific embodiments of the nutritional composition, the fiber is partially or entirely from oat fiber and/or chicory root fiber.

In specific embodiments, the nutritional compositions comprises fat in an amount of from about 0.25 wt% to about 10 wt% of a liquid serving of the nutritional composition. In additional specific embodiments, the fat comprises from about 0.5 wt% to about 8 wt% of the liquid nutritional composition, or from about 0.75 wt% to about 4 wt% of the liquid nutritional composition. In specific embodiments, fat comprises about 1 wt% of the liquid nutritional composition.

Specific embodiments of the liquid nutritional composition contain up to about 12 grams of fat, or up to about 9 grams of fat, per 330 ml serving. Specific embodiments of the liquid nutritional composition contain from about 0.1 gram to about 12 grams of fat, or from about 0.1 gram to about 9 grams of fat, or from about 0.5 gram to about 9 grams of fat, or from about 1 gram to about 8 grams of fat, per 330 ml serving. Specific embodiments of the liquid nutritional composition contain about 6 grams of fat per 330 ml serving.

Specific embodiments of the liquid nutritional composition contain fat from a plant source, for example, the fat comprises canola oil, corn oil, safflower oil, sunflower oil, coconut oil, fractionated coconut oil, lecithin, or a combination of two or more thereof. While, in one embodiment, the fat may comprise soy oil, in an additional embodiment, the compositions are free of soy-based oils, and, more specifically, free of any soy-based component, including free of soy-based oils and soy proteins.

Specific embodiments of the nutritional composition are free of genetically modified organisms, i.e., the nutritional compositions are non-GMO.

Specific embodiments of the nutritional composition are high in protein and fiber, and low in calories and sugar. For example, in specific embodiments, a liquid serving of the nutritional composition comprises, in a 330 ml serving, from 1 gram to about 15 grams of sugar, for example comprising sucrose, from about 1 gram to about 10 grams of fiber, more specifically from about 1 gram to about 5 grams of fiber, for example comprising oat fiber and/or chicory root, from about 1 gram to about 12 grams of fat, for example, comprising canola oil and/or corn oil, and from about 10 grams to about 30 grams of protein comprising fava protein isolate and pea protein, wherein the fava bean protein isolate comprises greater than about 10 wt% of total protein, more specifically greater than about 50 wt% of the total protein, and the pea protein comprises less than about 50 wt%, more specifically less than about 20 wt%, of the total protein, in the composition.

In additional specific embodiments, the liquid nutritional composition comprises, in a serving comprising about 330 ml, from about 0.1 grams to about 10 grams of sugar, for example, comprising sucrose, from about 0.5 to about 8 grams of fiber, for example, comprising oat fiber and/or chicory root, from about 1 gram to about 9 grams of fat, for example comprising canola oil and/or corn oil, and from about 15 grams to about 25 grams of protein comprising fava protein isolate and pea protein, wherein the fava bean protein isolate comprises greater than about 50 wt% of the total protein of the composition and pea protein comprises less than about 20 wt% of the total protein of the composition, and wherein the pH of the liquid nutritional composition is between about 7.0 and about 7.5.

In yet additional specific embodiments, the liquid nutritional composition comprises, in a serving comprising 330 ml, from about 0.1 grams to about 10 grams of sugar comprising sucrose, from about 0.5 to about 8 grams of fiber comprising oat fiber and/or chicory root, from about 1 gram to about 9 grams of fat comprising canola oil and/or corn oil, and from about 15 grams to about 25 grams of protein comprising fava protein isolate and pea protein, wherein the fava bean protein isolate comprises greater than about 50 wt% of the total protein of the composition and pea protein comprises less than about 20 wt% of the total protein of the composition, wherein the pH of the liquid nutritional composition is between about 7.0 and about 7.5, and wherein the liquid nutritional composition comprises at least one free amino acid comprising methionine, tryptophan, threonine, and/or lysine.

In additional embodiments, the nutritional composition comprises, in a serving comprising about 330 ml, from about 0.1 grams to about 10 grams of sugar comprising sucrose, from about 0.5 to about 8 grams of fiber comprising oat fiber and/or chicory root, from about 1 gram to about 9 grams of fat comprising canola oil and/or corn oil, and from about 15 grams to about 25 grams of protein comprising fava protein isolate and pea protein, wherein the fava bean protein isolate comprises 75-95 wt% of the total protein of the composition and pea protein comprises 5-25 wt% of the total protein of the composition, wherein the pH of the liquid nutritional composition is between about 7.0 and about 7.5, and wherein the liquid nutritional composition further comprises an additional protein, for example, oat protein, canola protein, corn protein, chick pea protein, and/or dairy protein, or a combination thereof. Additional embodiments are free of dairy protein.

Specific embodiments of the nutritional composition contain one or more vitamins. For example, specific embodiments of a nutritional composition comprise multiple vitamins and/or related nutrients, non-limiting examples of which include vitamin A, vitamin B12, vitamin C, vitamin D, vitamin K, thiamine, riboflavin, pyridoxine, niacin, folic acid, pantothenic acid, biotin, choline, inositol, and/or salts and derivatives thereof, and combinations thereof.

Most nutritional formulations that contain vitamin D3 are made with vitamin D3 derived from wool of sheep, which makes it unsuitable for vegan consumers. In a specific embodiment, the nutritional compositions described herein contain vitamin D3 from a plant source such as from lichens.

Specific embodiments of a nutritional composition comprise one or more minerals, non-limiting examples of which include calcium, phosphorus, magnesium, zinc, manganese, sodium, potassium, molybdenum, chromium, iron, copper, and/or chloride, and combinations thereof. Such minerals may be added in a convention form as known in the art. However, in specific embodiments, the liquid nutritional compositions are free of heavy metals or low in heavy metals such as arsenic, cadmium, lead, and mercury in order to comply with certain regulatory requirements, including California's Proposition 65.

Specific embodiments of the nutritional compositions comprise one or more of the vitamins described herein and one or more of the minerals described herein. Additional compositions comprise multiple vitamins and multiple minerals.

Specific embodiments of the liquid nutritional composition have a pH of from about 6.5 to about 7.8. Additional embodiments of the liquid nutritional composition have a pH of from about 7.0 to about 7.8, or more specifically, from about 7.3 to about 7.7. Particularly good product stability is achieved by hydration and stabilization of the proteins by pH adjustment in a range of from about 7.0 to about 7.5., or from about 7.3 to about 7.7, and nutritional compositions with a pH in these ranges exhibit a desirable combination of properties, including a smooth low viscosity, a non-grainy formulation, and good mouthfeel.

Specific embodiments of the nutritional composition are free of artificial flavor, artificial color, and/or artificial sweetener. Specific embodiments contain natural flavorings, for example natural vanilla, chocolate, and/or fruit flavors such as strawberry, apple, banana and the like. Additionally, in specific embodiments, the compositions include natural sweeteners such as stevia, erythritol, xylitol, monk fruit, and the like.

Specific embodiments of the liquid compositions are free of carrageenan. Although carrageenan is often employed in nutritional compositions to thicken the compositions and/or to emulsify the compositions, omitting carrageenan from the inventive liquid nutritional compositions improves the composition physical stability during heat treatment as compositions with carrageenan exhibited precipitation of the carrageenan with globular proteins.

As discussed previously, the compositions may be formed as liquid formulations and packaged as such, or a liquid formulation may be subjected to spray drying to produce a powder composition or one or more components of a powder composition. The liquid formulation may be prepared using conventional techniques employing an aqueous blend of components and an oil-based blend of components and combining these mixes to make an emulsified blend. In one embodiment, the fava bean protein isolate and pea protein isolate are added to a water solution of major minerals and are hydrated for a period of time. During the hydration process, the proteins react with the citrates and phosphates to increase the heat stability of the blend. Fiber ingredients may also be added to the protein solution. The oil blend and other remaining ingredients such as vitamin mineral premix, ascorbic acid, chromium chloride, natural intense sweeteners and flavors are added. After all the ingredients are incorporated, the pH of the blend is adjusted as discussed above, for example, in the range of 7.0 to 7.8, 7.0 to 7.5, or 7.0 to 7.30. In additional specific embodiments, the blend is then aseptically processed and, after sterilization, it is passed through a two-stage homogenizer (17236,9/3447,4 kPa)/ (2500/500 psi) and final cooler. The homogenization step ensures mixing of all the components together and prevents sedimentation. The liquid product may then be packaged or spray dried as desired.

The nutritional compositions, both aseptically packaged liquid compositions and packaged powder compositions, exhibit good storage stability. Products stored at room temperature and products stored at 37°C, both for three months, exhibit good stability in that no precipitation occurs in liquid products.

The following examples demonstrate various aspects of the invention.

### EXAMPLES

Exemplary embodiments of liquid nutritional compositions containing fava bean protein isolate and pea protein isolate are shown in Table 1. Liquid nutritional composition A does not contain any free amino acids in the forms of L-methionine, L-tryptophan, L-threonine, or L-lysine monohydrochloride, while liquid nutritional composition B includes such free amino acids. In these examples, pea protein isolate comprises about 17% of the total protein of the liquid nutritional composition and fava bean protein isolate comprises about 83% of the total protein of the liquid nutritional composition.

**Table 1**

| **Ingredient** | **Composition A, wt%** | **Composition B, wt%** |
|---|---|---|
| Water | 85.9 | 85.8 |
| Pea Protein (83% protein) | 1.25 | 1.25 |
| Fava Bean Protein Isolate (90% protein) | 5.91 | 5.91 |
| Rice Protein Concentrate | 0 | 0 |
| Oat and Chicory Root Fibers | 1.3 | 1.3 |
| Sucrose | 2.0 | 2.0 |
| High Oleic Safflower Oil | 1.4 | 2.0 |
| L-Methionine | 0.00 | 0.06 |
| L-Tryptophan | 0.00 | 0.01 |
| L-Threonine | 0.00 | 0.03 |
| L-Lysine Monohydrochloride | 0.00 | 0.05 |
| Additional Nutritional Composition Ingredients* | balance | balance |

| | | |
|---|---|---|
| *Includes vitamins, minerals, stabilizers, pH adjusters, natural sweeteners and natural flavorings. | | |

These compositions exhibit good storage stability as products stored at room temperature and products stored at 37°C, both for three months, exhibit no precipitation. Similar compositions are prepared employing differing ratios of fava bean protein isolate and pea protein isolate and similarly exhibit good stability. Additional similar compositions are prepared employing corn and/or canola oils.

Examples described herein are exemplary only and are not limiting of the invention defined by the claims.

## Claims

1. A nutritional composition comprising:
carbohydrate;
fat; and
protein;
wherein the protein comprises fava bean protein isolate and pea protein, the fava bean protein isolate comprises from 75 wt% to 95 wt% of the total protein in the composition, and the pea protein comprises from 5 wt% to 25 wt% of the total protein in the composition, and
wherein the fava bean isolate contains a protein content of at least 80 wt%.

2. The nutritional composition of claim 1, wherein the fava bean protein isolate comprises greater than 80 wt% of the total protein in the composition, and the pea protein comprises less than 20 wt% of the total protein in the composition.

3. The nutritional composition of claims 1 or 2, wherein the fava bean protein isolate comprises greater than 82 wt% fava bean protein.

4. The nutritional composition of any one of claims 1-3, wherein the composition is a liquid composition or is a powder that is reconstitutable with water to form a liquid composition, and the liquid composition comprises from 10 g to 30 g of the protein per 330 ml serving of the liquid nutritional composition.

5. The nutritional composition of any one of claims 1-4, wherein the composition is a liquid composition or is a powder that is reconstitutable with water to form a liquid composition, the carbohydrate of the liquid composition comprises up to 15 grams per 330 ml serving of the liquid composition, and the carbohydrate comprises sucrose, maltodextrin, tapioca, fruit powder, vegetable powder, isomaltulose, sucromalt, allulose, or a combination of two or more thereof.

6. The nutritional composition of any one of claims 1-5, wherein the composition is a liquid composition or is a powder that is reconstitutable with water to form a liquid composition, and the liquid composition comprises from 0.1 gram to 12 grams of fat from a plant source per 330 ml serving of the liquid composition.

7. The nutritional composition of claim 6, wherein the liquid nutritional composition comprises from 0.5 gram to 9 grams of the fat per 330 ml serving of the liquid composition.

8. The nutritional composition of any one of claims 1-7, wherein the pH of the liquid nutritional composition is from 7 to 7.5.

9. The nutritional composition of any one of claims 1-8, wherein the composition is a liquid composition or is a powder that is reconstitutable with water to form a liquid composition, and the liquid composition comprises at least 5 grams of fiber per 330 ml serving of the liquid composition.

10. The nutritional composition of claim 9, wherein the fiber comprises oat fiber, chicory root fiber, whole grain brown rice powder, fruit fiber, vegetable fiber, fructo-oligosaccharides (FOS), galacto-oligosaccharides (GOS), digestion-resistant soluble corn fiber, gum arabic, or a combination of two or more thereof.

11. The nutritional composition of any one of claims 1-10, further comprising methionine, tryptophan, threonine, and/or lysine.

12. The nutritional composition of any one of claims 1-11, further comprising rice protein, oat protein, canola protein, corn protein, chick pea protein, algae protein, lentil protein, quinoa protein, almond protein, hemp protein, flax seed protein, protein from one or more fruit powders, protein from one or more vegetable powders, or a combination of any two or more of such proteins.

13. The nutritional composition of any one of claims 1-12, wherein the nutritional composition is free of one or more of soy protein, dairy protein, fava bean concentrate, divicine and isouramil.

14. The nutritional composition of any one of claims 1-13, wherein the nutritional composition is free of artificial flavor, artificial color and artificial sweetener.

15. The liquid nutritional composition of claims 4 to 9, wherein the pea protein of the liquid nutritional composition is pea protein isolate containing at least 80 wt % pea protein.

## Patentansprüche

1. Nahrungsmittelzusammensetzung, umfassend:
Kohlenhydrate;
Fett; und
Protein; wobei das Protein Favabohnenproteinisolat und Erbsenprotein umfasst, das Favabohnenproteinisolat 75 Gew.-% bis 95 Gew.-% des Gesamtproteins in der Zusammensetzung ausmacht und das Erbsenprotein 5 Gew.-% bis 25 Gew.-% des Gesamtproteins in der Zusammensetzung ausmacht, und
wobei das Favabohnenisolat einen Proteingehalt von mindestens 80 Gew.-% aufweist.

2. Nahrungsmittelzusammensetzung nach Anspruch 1, bei der das Favabohnenproteinisolat mehr als 80 Gew.-% des Gesamtproteins in der Zusammensetzung ausmacht und das Erbsenprotein weniger als 20 Gew.-% des Gesamtproteins in der Zusammensetzung ausmacht.

3. Nahrungsmittelzusammensetzung nach Anspruch 1 oder 2, bei der das Favabohnenproteinisolat mehr als 82 Gew.-% Favabohnenprotein enthält.

4. Nahrungsmittelzusammensetzung nach einem der Ansprüche 1 bis 3, wobei die Zusammensetzung eine flüssige Zusammensetzung oder ein Pulver ist, das mit Wasser zu einer flüssigen Zusammensetzung rekonstituierbar ist, und die flüssige Zusammensetzung 10 g bis 30 g des Proteins pro 330-ml-Portion der flüssigen Nahrungsmittelzusammensetzung umfasst.

5. Nahrungsmittelzusammensetzung nach einem der Ansprüche 1 bis 4, wobei die Zusammensetzung eine flüssige Zusammensetzung oder ein Pulver ist, das mit Wasser zu einer flüssigen Zusammensetzung rekonstituierbar ist, wobei die Kohlenhydrate der flüssigen Zusammensetzung bis zu 15 Gramm pro 330-ml-Portion der flüssigen Zusammensetzung umfassen und die Kohlenhydrate Saccharose, Maltodextrin, Tapioka, Fruchtpulver, Gemüsepulver, Isomaltulose, Sucromalt, Allulose oder eine Kombination aus zwei oder mehreren davon umfassen.

6. Nahrungsmittelzusammensetzung nach einem der Ansprüche 1 bis 5, wobei die Zusammensetzung eine flüssige Zusammensetzung oder ein Pulver ist, das mit Wasser zu einer flüssigen Zusammensetzung rekonstituierbar ist, und die flüssige Zusammensetzung 0,1 Gramm bis 12 Gramm Fett pflanzlichen Ursprungs pro 330-ml-Portion der flüssigen Zusammensetzung umfasst.

7. Nahrungsmittelzusammensetzung nach Anspruch 6, wobei die flüssige Nahrungsmittelzusammensetzung 0,5 bis 9 Gramm des Fetts pro 330-ml-Portion der flüssigen Zusammensetzung umfasst.

8. Nahrungsmittelzusammensetzung nach einem der Ansprüche 1 bis 7, bei der der pH-Wert der flüssigen Nahrungsmittelzusammensetzung zwischen 7 und 7,5 liegt.

9. Nahrungsmittelzusammensetzung nach einem der Ansprüche 1 bis 8, wobei die Zusammensetzung eine flüssige Zusammensetzung oder ein Pulver ist, das mit Wasser zu einer flüssigen Zusammensetzung rekonstituierbar ist, und die flüssige Zusammensetzung mindestens 5 Gramm Ballaststoffe pro 330-ml-Portion der flüssigen Zusammensetzung umfasst.

10. Nahrungsmittelzusammensetzung nach Anspruch 9, bei der die Ballaststoffe Haferfasern, Zichorienwurzelfasern, Vollkorn-Braunreispulver, Fruchtfasern, Gemüsefasern, Fructo-Oligosaccharide (FOS), Galacto-Oligosaccharide (GOS), verdauungsresistente lösliche Maisfasern, Gummi arabicum oder eine Kombination aus zwei oder mehr davon umfassen.

11. Nahrungsmittelzusammensetzung nach einem der Ansprüche 1 bis 10, die ferner Methionin, Tryptophan, Threonin und/oder Lysin umfasst.

12. Nahrungsmittelzusammensetzung nach einem der Ansprüche 1 bis 11, die ferner Reisprotein, Haferprotein, Raps-Protein, Maisprotein, Kichererbsenprotein, Algenprotein, Linsenprotein, Quinoaprotein, Mandelprotein, Hanfprotein, Leinsamenprotein, Protein aus einem oder mehreren Fruchtpulvern, Protein aus einem oder mehreren Gemüsepulvern oder eine Kombination aus zwei oder mehr dieser Proteine umfasst.

13. Nahrungsmittelzusammensetzung nach einem der Ansprüche 1 bis 12, wobei die Nahrungsmittelzusammensetzung frei von einem oder mehreren der folgenden Bestandteile ist: Sojaprotein, Milchprotein, Favabohnenkonzentrat, Divicin und Isouramil.

14. Nahrungsmittelzusammensetzung nach einem der Ansprüche 1 bis 13, wobei die Nahrungsmittelzusammensetzung frei von künstlichen Aromen, künstlichen Farbstoffen und künstlichen Süßungsmitteln ist.

15. Flüssige Nahrungsmittelzusammensetzung nach den Ansprüchen 4 bis 9, bei der das Erbsenprotein der flüssigen Nahrungsmittelzusammensetzung ein Erbsenproteinisolat ist, das mindestens 80 Gew.-% Erbsenprotein enthält.

## Revendications

1. Composition nutritionnelle, comprenant :
de l'hydrate de carbone ;
de la matière grasse ; et
une protéine ;
dans laquelle la protéine comprend un isolat de protéine de féverole et une protéine de pois, l'isolat de protéine de féverole représente de 75 % en poids à 95 % en poids de la protéine totale dans la composition, et la protéine de pois représente de 5 % en poids à 25 % en poids de la protéine totale dans la composition, et
dans laquelle l'isolat de féverole contient une teneur en protéine d'au moins 80 % en poids.

2. Composition nutritionnelle selon la revendication 1, dans laquelle l'isolat de protéine de féverole représente plus de 80 % en poids de la protéine totale dans la composition, et la protéine de pois représente moins de 20 % en poids de la protéine totale dans la composition.

3. Composition nutritionnelle selon les revendications 1 ou 2, dans laquelle l'isolat de protéine de féverole comprend plus de 82 % en poids de protéine de féverole.

4. Composition nutritionnelle selon l'une quelconque des revendications 1 à 3, dans laquelle la composition est une composition liquide ou est une poudre qui peut être reconstituée avec de l'eau pour former une composition liquide, et la composition liquide comprend de 10 g à 30 g de la protéine par portion de 330 ml de la composition nutritionnelle liquide.

5. Composition nutritionnelle selon l'une quelconque des revendications 1 à 4, dans laquelle la composition est une composition liquide ou est une poudre qui peut être reconstituée avec de l'eau pour former une composition liquide, l'hydrate de carbone de la composition liquide représente jusqu'à 15 grammes par portion de 330 ml de la composition liquide, et l'hydrate de carbone comprend du saccharose, de la maltodextrine, du tapioca, de la poudre de fruit, de la poudre de légumineuse, de l'isomaltulose, du sucromalt, de l'allulose, ou une combinaison de deux ou plus de ceux-ci.

6. Composition nutritionnelle selon l'une quelconque des revendications 1 à 5, dans laquelle la composition est une composition liquide ou est une poudre qui peut être reconstituée avec de l'eau pour former une composition liquide, et la composition liquide comprend de 0,1 gramme à 12 grammes de matière grasse provenant d'une source végétale par portion de 330 ml de la composition liquide.

7. Composition nutritionnelle selon la revendication 6, dans laquelle la composition nutritionnelle liquide comprend de 0,5 gramme à 9 grammes de graisse par portion de 330 ml de la composition liquide.

8. Composition nutritionnelle selon l'une quelconque des revendications 1 à 7, dans laquelle le pH de la composition nutritionnelle liquide est de 7 à 7,5.

9. Composition nutritionnelle selon l'une quelconque des revendications 1 à 8, dans laquelle la composition est une composition liquide ou est une poudre qui peut être reconstituée avec de l'eau pour former une composition liquide, et la composition liquide comprend au moins 5 grammes de fibres par portion de 330 ml de la composition liquide.

10. Composition nutritionnelle selon la revendication 9, dans laquelle les fibres comprennent des fibres d'avoine, des fibres de racine de chicorée, de la poudre de riz brun à grains entiers, des fibres de fruits, des fibres végétales, des fructo-oligosaccharides (Fos), des galacto-oligosaccharides (GOS), des fibres de maïs solubles résistantes à la digestion, de la gomme arabique ou une combinaison de deux ou plus de ceux-ci.

11. Composition nutritionnelle selon l'une quelconque des revendications 1 à 10, comprenant en outre de la méthionine, du tryptophane, de la thréonine et/ou de la lysine.

12. Composition nutritionnelle selon l'une quelconque des revendications 1 à 11, comprenant en outre une protéine de riz, une protéine d'avoine, une protéine de canola, une protéine de maïs, une protéine de pois chiche, une protéine d'algue, une protéine de lentille, une protéine de quinoa, une protéine d'amande, une protéine de chanvre, une protéine de graine de lin, une protéine provenant d'une ou plusieurs poudres de fruits, une protéine provenant d'une ou plusieurs poudres de légumineuses, ou une combinaison de deux ou plus quelconques de ces protéines.

13. Composition nutritionnelle selon l'une quelconque des revendications 1 à 12, dans laquelle la composition nutritionnelle est exempte d'un ou plusieurs parmi la protéine de soja, la protéine laitière, le concentré de féverole, la divicine et l'isouramil.

14. Composition nutritionnelle selon l'une quelconque des revendications 1 à 13, dans laquelle la composition nutritionnelle est exempte d'arôme artificiel, de colorant artificiel et d'édulcorant artificiel.

15. Composition nutritionnelle liquide selon les revendications 4 à 9, dans laquelle la protéine de pois de la composition nutritionnelle liquide est un isolat de protéine de pois contenant au moins 80 % en poids de protéine de pois.
